# Europäisches Patentamt

## European Patent Office

## Office européen des brevets

(19)

(11) Veröffentlichungsnummer: **0 140 069**
**B1**

(12) **EUROPÄISCHE PATENTSCHRIFT**

(45) Veröffentlichungstag der Patentschrift:
**02.11.88**

(51) Int. Cl.⁴: **B 29 C 65/08**

(21) Anmeldenummer: **84110728.7**

(22) Anmeldetag: **08.09.84**

(54) Verfahren zum dichten Verbinden von Rohrenden in Rohrböden.

(30) Priorität: **20.10.83 DE 3338157**

(43) Veröffentlichungstag der Anmeldung:
**08.05.85 Patentblatt 85/19**

(45) Bekanntmachung des Hinweises auf die Patenterteilung:
**02.11.88 Patentblatt 88/44**

(84) Benannte Vertragsstaaten:
**AT BE CH DE FR GB IT LI NL SE**

(56) Entgegenhaltungen:
**DE-A-2 831 240**
**GB-A-2 076 335**

**HLH 24 (1973), no. 8 August, Seiten 248-253**

(73) Patentinhaber: **Akzo Patente GmbH, Postfach 10 01 49 Kasinostrasse 19- 23, D-5600 Wuppertal- 1 (DE)**

(72) Erfinder: **Wollbeck, Rudi, Am Stadtwalt 24, D-8765 Erlenbach (DE)**
Erfinder: **Zang, Thomas, Ziegelbergweg 9, D-8752 Goldbach (DE)**

EP 0 140 069 B1

## Beschreibung

Gegenstand der vorliegend.. Erfindung ist ein Verfahren zum dichten Verbinden von sehr dünnwandigen Rohrenden in dicke Rohrböden, wobei die Rohrenden in die in gewünschter Anzahl in dem Rohrboden vorgesehenen Löcher in den Rohrboden eingebracht werden.

Die dichte Verbindung von Rohrenden in Rohrböden spielt im Modulbau eine entscheidende Rolle. Module finden ihren Einsatz als Wärmetauscher und/oder Stoffaustauscher. Hierbei werden Rohre eingesetzt, die in der Regel dünnwandig sind. Bei Stoffaustauschern werden Membranrohre eingesetzt. Diese Rohre haben in der Regel kreisförmigen Querschnitt, sie können jedoch auch andere Querschnitte, beispielsweise ovale, elliptische oder vieleckige Querschnitte aufweisen. Da der Wirkungsgrad eines Wärmetauschers oder eines Stoffaustauschers von der zur Verfügung gestellten Oberfläche und Wandstärke der Rohre abhängig ist, wird versucht die Querschnittsabmessungen dieser Rohre, also Durchmesser und Wandstärke, möglichst gering zu halten, um auf diese Weise die Baugröße von Modulen bei gleicher Leistung zu verringern. Je geringer die Querschnittsabmessungen dieser Rohre jedoch werden, desto schwieriger ist ein dichtes Einbetten der Rohrenden im Rohrboden zu bewerkstelligen.

Je nach Einsatzzweck der fertigen Module müssen die Einbettungsstellen zwischen Rohrenden und Rohrenden, gegebenenfalls auch unter erhöhtem Druck, flüssigkeits- und/oder gasdicht sein.

Beispielsweise ist ein Verfahren der eingangs genannten Art aus HLH 24 (1973), Nr. 8, August, Seiten 248 bis 253 unter der Bezeichnung Heiztempelschweißverfahren zur Herstellung von Wärmetauschern bekannt geworden. Hierbei werden die Rohrenden mit dem Rohrboden auf der Stirnfläche mittels eines Werkzeuges verschweißt, wobei jedoch vorab zur Vorwärmung des den Rohrenden überragenden Rohrendes ein zweites Werkzeug erforderlich ist. Dieses bekannte Verfahren ist sehr aufwendig und benötigt außerdem sehr viele Energie zur Herstellung der Schweißnaht.

Es ist deshalb Aufgabe der vorliegenden Erfindung, ein Verfahren zum dichten Verbinden von sehr dünnwandigen Rohrenden in dicken Rohrböden zur Verfügung zu stellen, bei welchem eine dichte Verbindung auf einfache Weise gewährleistet ist. Auch soll ein Verfahren zur Verfügung gestellt werden, durch welches es möglich wird, daß alle Teile eines Moduls aus dem gleichen Werkstoff bestehen.

Diese Aufgabe wird bei dem eingangs genannten Verfahren dadurch gelöst, daß Rohrenden verwendet werden, die eine Wandstärke von 0,05 bis 3 mm aufweisen, daß Rohre und Rohrboden aus mittels Ultraschall schmelzbarem Material bestehen, und daß eine im Ultraschallbereich axial schwingende Sonotrode deren Querschnittsfläche im Kontaktbereich mindestens einen größeren Querschnitt als der Innenquerschnitt des zu verbindenden Rohrendes aufweist, axialgleich auf das mit dem Rohrboden zu verbindende Rohrende zubewegt und über die Kontaktfläche der Sonotrode in Berührung gebracht wird, wobei unter axialer Druckbelastung der Sonotrode eine Schweißverbindung zwischen Rohrende und Rohrboden erreicht wird.

Unter Rohren werden im Sinne der Erfindung außer Rohren auch Schläuche, Hohlfäden, Kapillare o. dgl. verstanden, deren Enden, hier Rohrenden genannt, in einer Dichtfläche oder einem Rohrboden eingebettet werden.

Rohre mit geringer Wandstärke haben gewöhnlich einen Innendurchmesser, der bis in den Bereich von 12 mm geht. Auch Rohrenden mit einem Innendurchmesser von unter 2 mm lassen sich nach dem erfindungsgemäßen Verfahren gut mit dem Rohrboden verbinden. Das Verfahren soll aber auch auf Rohre mit größerem Querschnitt anwendbar sein.

Die Querschnittsabmessungen der Löcher des Rohrbodens sind in der Regel geringfügig größer als die Außenabmessungen der Rohre. Die Rohre werden so weit in die Löcher eingebracht, daß die Rohrenden entweder aus der Stirnfläche des Rohrbodens herausragen oder bündig mit dem Rohrboden abschließen. Für spezielle Einsatzzwecke kann es auch günstig sein, wenn die Rohrenden nur teilweise in die Löcher eingesetzt sind, also unterhalb der Stirnfläche enden.

Der Vorteil der Ultraschallverschweißung liegt darin, daß Rohr und Rohrboden an der Kontaktstelle kurzzeitig und gleichmäßig erhitzt werden.

Für eine gute Verschweißung sorgt eine Ultraschallfrequenz von 18 bis 40 kHz, wobei über Amplitude und Einschaltdauer die Temperatur und somit auch die Güte der Verbindung zwischen Rohr und Rohrboden eingestellt werden kann Amplitude und Einschaltdauer sind außerdem je nach verwendetem Material für Rohre und Rohrboden unterschiedlich.

Die Sonotrode ist das auf den für die Erzeugung der Frequenz notwendigen Wandler aufgesetzte Werkzeug, dessen äußere Abmessungen von der Frequenz und der Amplitude des Ultraschalls abhängig sind. Das freie Ende der Sonotrode in Axialrichtung ist als die für die Verschweißung notwendige Kontaktfläche für die Rohrenden ausgebildet. Nach der Verschweißung ergibt die Schweißstelle dieselbe geometrische Figur, die die Kontaktfläche der Sonotrode besitzt.

Die Fixierung der Rohre vor dem Verschweißen erfolgt durch an sich bekannte Maßnahmen, beispielsweise durch Abstützen der freien Rohrenden, durch speziell konstruierte Halterungen oder auch durch Eingießen der freien Rohrenden in ein härtbares Material, welches dann nach Beendigung der Verschweißung des einen Rohrbodens abgeschnitten wird.

Eine einwandfreie Einführung der Kontaktfläche der Sonotrode in ein Rohrende wird erfindunasgemäß in vorteilhafter Weise dadurch erreicht, daß diese Kontaktfläche der Sonotrode auf der dem Rohrende zugewandten Seite durch einen Führungszapfen verlängert ist, dessen Außendurchmesser gleich oder kleiner, in der Regel geringfügig kleiner, als der Innendurchmesser des zu verbindenden Rohrendes ist. Eine Anfasung des freien Endes des Führungszapfens erleichtert das Einführen der Sonotrode in die Rohre.

Günstig ist es, wenn die Querschnittsfläche der Sonotrode im Kontaktbereich (mit oder ohne Führungszapfen) einen in axialer Richtung von der dem Rohrende zugewandten Seite weg sich vergrößernden Durchmesser aufweist. Hierbei hat sich als besonders vorteilhaft eine kegelstumpfförmige Ausbildung der Kontaktfläche der Sonotrode herausgestellt. Die Kontaktfläche der Sonotrode kann aber auch andere geometrische Figuren annehmen, beispielsweise eine rotationssymmetrische Parabel. Die kegelstumpfförmige Ausbildung führt zu einer konisch sich verjüngenden Öffnung im Rohrboden, die in den Innenquerschnitt des Rohres führt, wodurch sich beim Einsatz der fertigen Module günstige Strömungsverhältnisse beim Einlauf des Strömungsmediums in die Rohre ergeben. Ähnliches gilt auch für andere geometrische Ausführungsformen der Kontaktfläche der Sonotrode.

Bei der kegelstumpfförmigen Ausführung der Sonotrode ergibt sich eine Verbindung der Rohrenden mit dem Rohrboden, die durch folgende Beschreibung charakterisiert werden kann.

Durch die bei der Herstellung der Verbindung erfolgte Materialverdrängung ergibt sich ein geringfügiger Wulst, der sich über die Außenseite des Rohrbodens erhebt und sich gleichmäßig über den Umfang des Randes des kegelstumpfförmigen Trichters erstreckt. Außerdem kann man im Schnitt senkrecht zur Achse durch die Verbindungsstelle ein homogenes Schmelzgefüge erkennen. Bei gleicher Materialwahl von Rohrboden und Rohren ist eine Übergangsstelle zwischen Rohr und Rohrboden im Schnittbild nicht mehr festzustellen. Auch ergibt sich bei dieser Art der Verbindung von Rohrenden mit dem Rohrboden eine überaus gute und sichere Verankerung der Rohre im Rohrboden. Es wird somit ein Wärme- bzw. Stoffaustauscher zur Verfügung gestellt, der sich durch seine besonders günstige Gebrauchstüchtigkeit auszeichnet.

Erfindungsgemäß ist es ebenfalls möglich, daß die Sonotrode mehrere Kontaktflächen aufweist, wobei die Anzahl der Kontaktflächen höchstens gleich der Anzahl der mit dem Rohrboden zu verbindenden Rohrenden ist. Mit einer solchen Sonotrode ist es möglich, ganze Gruppen von Rohrenden oder sogar alle Rohrenden eines Moduls gleichzeitig mit dem Rohrboden zu verschweißen.

Rohre und Rohrboden können praktisch aus jedem mittels Ultraschall schweißbarem Material bestehen. Hierzu eignen sich zum Beispiel auch Metalle. Vorteilhaft bestehen jedoch Rohre und Rohrboden aus thermoplastischen Kunststoffen, beispielsweise aus PA, PVC, ABS, PE, PP, PVDF u. a. Bei thermoplastischen Kunststoffen wird vorteilhafterweise die Kontaktfläche der Sonotrode mit TEFLON o. ä besprüht oder beschichtet.

Besonders gute Schweißverbindungen werden dann erreicht, wenn Rohre und Rohrboden aus dem gleichen Material, gegebenenfalls aus dem gleichen thermoplastischen Kunststoff bestehen.

Die Erfindung wird anhand von Figuren näher erläutert.

Es zeigen:

Figur 1    einen Ausschnitt aus einem Rohrboden mit einem eingesetzten Rohr mit dem freien Ende der Sonotrode, die mit ihrem Führungszapfen gerade in das Rohr eintaucht,

Figur 2    einen Ausschnitt aus einem Rohrboden mit einem bereits mit dem Rohrboden verschweißten Rohrende, wobei das freie Ende der Sonotrode in der Stellung dargestellt ist, welche sie bei Abschluß der Verschweißung einnimmt,

Figur 3    einen Ausschnitt aus einem Rohrboden mit einem eingesetzten Rohr und dazugehöriger Kontaktfläche der Sonotrode, mit deren Hilfe eine Umbördelung des Rohres und eine Verschweißung auf der freien Stirnseite des Rohrbodens möglich ist,

Figur 4    eine weitere mögliche Ausführungsform der Kontaktfläche der Sonotrode,

Figur 5    den schematischen Aufbau eines Moduls, bestehend aus zwei Rohrböden und eingeschweißten Rohren im Querschnitt,

Figur 6    den Modul gemäß Figur 5 in Draufsicht.

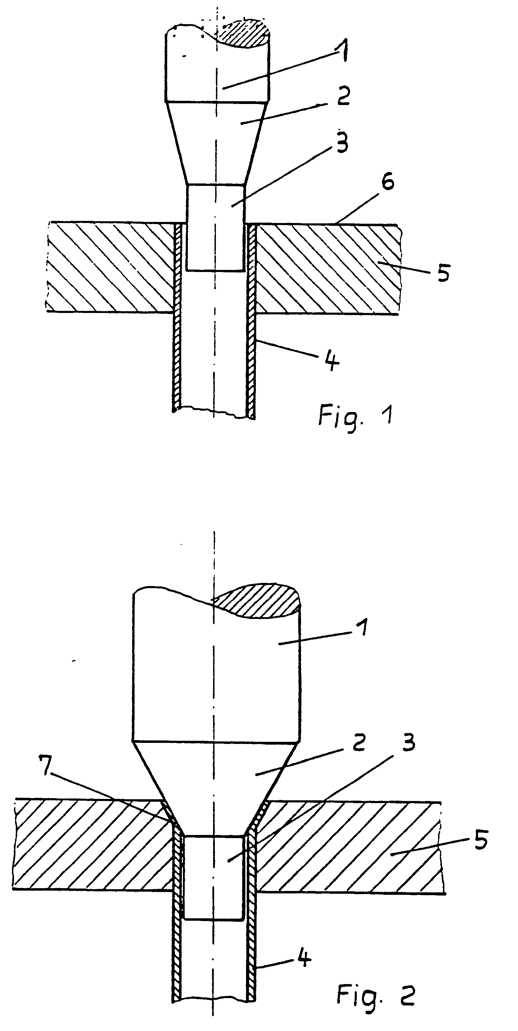

In Figur 1 ist das freie, aus Kontaktfläche 2 und Führungszapfen 3 bestehende Ende der Sonotrode 1 dargestellt. Der Führungszapfen 3 weist eine geringfügig kleinere Querschnittsabmessung als die Innenabmessung des Rohres 4 auf. Das Rohr 4 ist derart in das Loch des Rohrbodens 5 eingebracht, daß das Rohrende bündig mit der äußeren Stirnfläche 6 des Rohrbodens 5 abschließt. Der Führungszapfen 3 der Sonotrode 1 ist bereits axialgleich zum Rohr in das Rohrende des Rohres 4 eingetaucht.

Wird nun die Sonotrode 1 weiter abgesenkt und mit Ultraschall beaufschlagt, so läßt sich die Sonotrode unter Druckbeaufschlagung beispielsweise soweit in das Rohrende absenken, wie in Figur 2 dargestellt. Hierbei wird das Rohrende als Einlauftrichter 7 ausgebildet und gleichzeitig mit dem Rohrboden 5 verschweißt.

Bei der in Figur 1 und 2 dargestellten Ausführungsform der Sonotrode 1 ist die Kontaktfläche 2 der Sonotrode 1 kegelstumpfförmig ausgebildet.

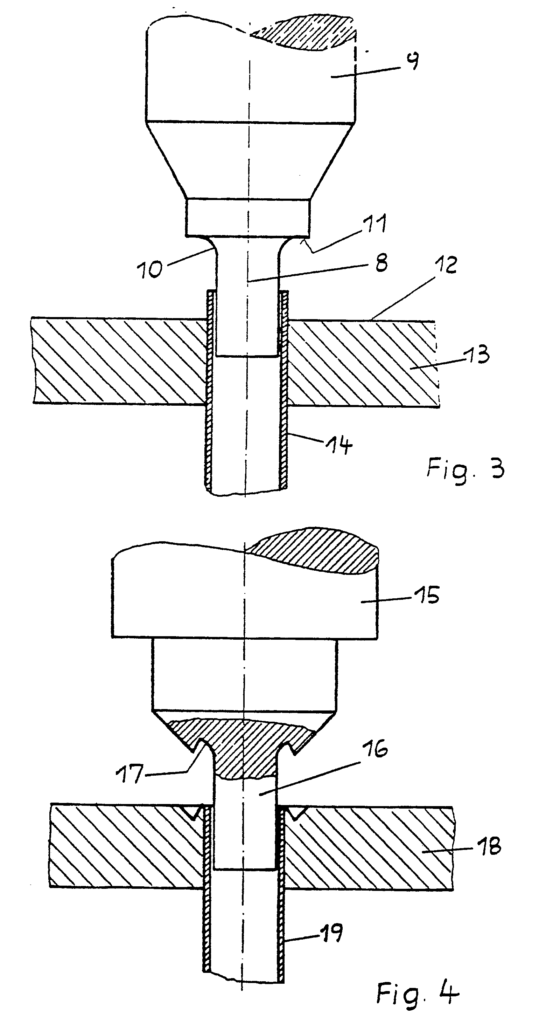

In Figur 3 erweitert sich der Führungszapfen 8 der Sonotrode 9 über einen Radius 10 auf eine radial sich erstreckende Kontaktfläche 11. Mit Hilfe dieser Ausführungsform des freien Endes der Sonotrode 9 ist es möglich, das über die äußere Stirnfläche 12 des Rohrbodens 13 hinausragende Rohrende des Rohres 14 umzubördeln und auf der freien bzw. äußeren Stirnseite 12 des Rohrbodens 13 zu verschweißen.

In Figur 4 ist eine weitere Ausführungsform des freien Endes der Sonotrode 15 mit Führungszapfen 16 und Kontaktfläche 17 dargestellt. Nach Durchführung der Verschweißung ist die Schweißstelle als Wulst ausgebildet, welche in den Rohrboden 18 eingelassen ist. Das Rohr 19 ist dann über diesen nicht dargestellten Wulst mit dem Rohrboden 18 verschweißt.

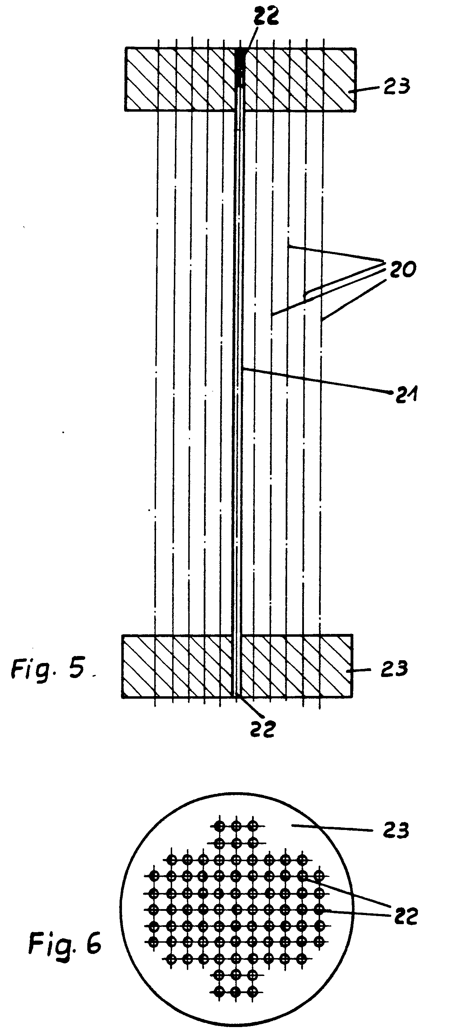

In Figur 5 und 6 ist schematisch eine mögliche Ausführungsform eines Moduls mit zwei Rohrböden 23 und einer Anzahl von Rohren 20 dargestellt. Hierbei sind die Rohre 20 lediglich durch ihre Achsen dargestellt. Ein Rohr 22 ist der Verständlichkeit halber eingezeichnet. Der Übersichtlichkeit wegen sind die vorher näher beschriebenen, in verschiedener Weise durchgeführten Schweißstellen an den Rohrenden 22 nicht dargestellt.

Solche Module können nunmehr in Gehäuse eingesetzt werden und dem jeweiligen Einsatzzweck zugeführt werden.

Das Verfahren zum Verbinden von Rohrenden mit einem Rohrboden wurde in vorteilhafter Weise derart dargestellt, daß die Sonotrode in die Rohrenden eingeführt wird, also Rohrboden und Rohre beim Durchführen des erfindungsgemäßen Verfahrens feststehen. Es wird jedoch als äquivalent und im Rahmen der Erfindung liegend betrachtet, wenn das erfindungsgemäße Verfahren derart durchgeführt wird, daß die Sonotrode feststeht und Rohrboden mit Rohren gegen die Sonotrode bewegt und gedrückt werden.

**Patentansprüche**

1. Verfahren zum dichten Verbinden von sehr dünnwandigen Rohrenden in dicke Rohrböden, wobei die Rohrenden in die in gewünschter Anzahl in dem Rohrboden vorgesehenen Löcher in den Rohrboden eingebracht werden, dadurch gekennzeichnet, daß Rohrenden verwendet werden, die eine Wandstärke von 0,05 bis 3 mm aufweisen, daß Rohre (4, 14, 19, 22) und Rohrboden (5, 13, 18, 23) aus mittels Ultraschall schmelzbarem Material bestehen, und daß eine im Ultraschallbereich axial schwingende Sonotrode (1, 9, 15) deren Querschnittsfläche im Kontaktbereich (2, 11, 17) mindestens einen größeren Querschnitt als der Innenquerschnitt des zu verbindenden Rohrendes (4, 14, 19, 22) aufweist, axialgleich auf das mit dem Rohrboden (5, 13, 18, 23) zu verbindende Rohrende (5, 13, 18, 19) zubewegt und über die Kontaktfläche (2, 11, 17) der Sonotrode (1, 9, 15) in Berührung gebracht wird, wobei unter axialer Druckbelastung der Sonotrode (1, 9, 15) eine Schweißverbindung zwischen Rohrende (4, 14, 19, 22) und Rohrboden (5, 13, 18, 23) erreicht wird.

2. Verfahren nach Anspruch 1, dadurch gekennzeichnet, daß die Kontaktflächen (2, 11, 17) der Sonotrode (1, 9, 15) auf der dem Rohrende (4, 14, 19) zugewandten Seite durch einen Führungszapfen (3, 8, 16) verlängert ist, dessen Außendurchmesser gleich oder kleiner als der Innendurchmesser des zu verbindenden Rohrendes (4, 14, 19) ist.

3. Verfahren nach Anspruch 1 oder 2, dadurch gekennzeichnet, daß die Querschnittsfläche der Sonotrode (1, 9, 15) im Kontaktbereich (2, 11, 17) einen in axialer Richtung von der dem Rohrende (4, 14, 19) zugewandten Seite weg sich vergrößernden Durchmesser aufweist.

4. Verfahren nach Anspruch 3, dadurch gekennzeichnet, daß die Kontaktfläche (2) der Sonotrode (1) kegelstumpfförmig ausgebildet ist.

5. Verfahren nach einem der Ansprüche 1 bis 4, dadurch gekennzeichnet, daß die Sonotrode mehrere Kontaktflächen aufweist, wobei die Anzahl der Kontaktflächen höchstens gleich der Anzahl der mit dem Rohrboden zu verbindenden Rohrenden ist.

6. Verfahren nach einem der Ansprüche 1 bis 5, dadurch gekennzeichnet, daß Rohre (4, 14, 19, 22) und Rohrboden (5, 13, 18, 23) aus thermoplastischem Kunststoff bestehen.

7. Verfahren nach Anspruch 6, dadurch gekennzeichnet, daß Rohre (4, 14, 19, 22) und Rohrboden (5, 13, 18, 23) aus dem gleichen thermoplastischen Kunststoff bestehen.

**Claims**

1. Process for tightly connecting very thin walled tube ends into thick tube support plates, the tube ends being introduced into the holes which are provided in the required number in the tube support plate, characterised in that the tube ends used have a wall thickness of from 0.05 to 3 mm, the tubes (4, 14, 19, 22) and tube support plates (5, 13, 18, 23) are made of a material which can be melted by ultrasound and in that a sonotrode (1, 9, 15) which oscillates in the axial direction in the region of ultrasound and the cross-sectional area of which in the region of contact (2, 11, 17) is at least greater than the internal cross-section of the tube end to be connected (4, 14, 19, 22) is moved coaxially towards the tube end (5, 13, 18, 19) which is to be connected to the tube support plate (5, 13, 18, 23) and said sonotrode (1, 9, 15) is brought into contact with the tube end by its contact surface (2, 11, 17), and a welding connection is formed between the tube end (4, 14, 19, 22) and the tube support plate (5, 13, 18, 23) under the axial pressure acting on the sonotrode (1, 9, 15).

2. Process according to claim 1, characterised in that the contact surfaces (2, 11, 17) of the sonotrode (1, 9, 15) are extended into a guide pin (3, 8, 16) at the end facing the tube end (4, 14, 19), the external diameter of which pin is equal to or smaller than the internal diameter of the tube end (4, 14, 19) to be connected.

3. Process according to claim 1 or 2, characterised in that the cross-sectional area of the sonotrode (1, 9, 15) increases in diameter in its contact region (2, 11, 17) in the axial direction from the end facing the tube end (4, 14, 19).

4. Process according to claim 3, characterised in that the contact surface (2) of the sonotrode (1) is in the form of a truncated cone.

5. Process according to one of the claims 1 to 4, characterised in that the sonotrode has several contact surfaces, the number of contact surfaces being at the most equal to the number of tube ends which are to be connected to the tube support plate.

6. Process according to one of the claims 1 to 5, characterised in that the tubes (4, 14, 19, 22) and tube support plates (5, 13, 18, 23) are made of thermoplastic synthetic resin.

7. Process according to claim 6, characterised in that the tubes (4, 14, 19, 22) and tube support plates (5, 13, 18, 23) are made of the same thermoplastic synthetic resin.

**Revendications**

1. Procédé d'assemblage étanche d'extrémités de tubes à paroi très mince dans des plaques à tubes épaisses, les extrémités des tubes étant placées dans les trous prévus en nombre désiré dans la plaque à tubes, caractérisé par le fait que les extrémités de tubes utilisées ont une épaisseur de paroi de 0,05 à 3 mm, par le fait que les tubes (4, 14, 19, 22) et la plaque à tubes (5, 13, 18, 23) sont en une matière fusible par ultrasons, et par le fait qu'une sonotrode (1, 9, 15) vibrant axialement dans le domaine des ultrasons, présentant au moins une section droite plus grande que la section droite intérieure du tube à assembler (4, 14, 19, 22) est approchée coaxialement à l'extrémté de tube (5, 13, 18, 19) devant être assemblée à la plaque à tube (5, 13, 18, 23) et est mise en contact sur l'étendue de la surface de contact (2, 11, 17) de la sonotrode (1, 9, 15), une liaison soudée entre extrémité de tube (4, 14, 19, 22) et plaque à tubes (5, 13, 18, 23) étant obtenue sous charge de pression axiale de la sonotrode (1, 9, 15).

2. Procédé selon revendication 1, caractérisé par le fait que la surface de contact (2, 11, 17) de la sonotrode (1, 9, 15) du côté tourné vers l'extrémité du tube (4, 14, 19) est prolongée par un téton de guidage (3, 8, 16) dont le diamètre extérieur est au plus égal au diamètre intérieur de l'exrémité de tube (4, 14, 19) à assembler.

3. Procédé selon revendication 1 ou 2, caractérisé par le fait que la section droite de la sonotrode (1, 9, 15) présente, dans la région du contact (2, 11, 17) un diamètre croissant en direction axiale depuis le côté tourné vers l'extrémité du tube (4, 14, 19).

4. Procédé selon revendication 3, caractérisé par le fait que la surface de contact (2) de la sonotrode (1) est tronconique.

5. Procédé selon l'une des revendications 1 à 4, caractérisé par le fait que la sonotrode présente plusieurs surfaces de contact dont le nombre est au maximum égal au nombre des extrémités de tube à assembler à la plaque à tubes.

6. Procédé selon l'une des revendications 1 à 5, caractérisé par le fait que les tubes (4, 14, 19, 22) et la plaque à tubes (5, 13, 18, 23) sont en matière thermoplastique.

7. Procédé selon revendication 6, caractérisé par le fait que les tubes (4, 14, 19, 22) et la plaque à tubes (5, 13, 18, 23) sont faits d'une même matière thermoplastique.

Fig. 1

Fig. 2

9

11

10

8

12

13

14

Fig. 3

15

17

16

18

19

Fig. 4

Fig. 5.

Fig. 6